# FASCICULE DE BREVET EUROPEEN

(11) **EP 0 577 482 B1**
(45) Date de publication et mention de la délivrance du brevet: **13.03.1996**
(21) Numéro de dépôt: 93401640.3
(22) Date de dépôt: 25.06.1993
(51) Int. Cl.: F16D 48/02

(54) **Actionneur électro-hydraulique notamment pour la commande d'un embrayage de véhicule automobile**
Elektrohydraulisches Stellglied, insbesondere zur Betätigung einer Kraftfahrzeugkupplung
Electrohydraulic actuator especially for controlling a motor vehicle clutch

(30) Priorité: 25.06.1992 FR 9207819
(43) Date de publication de la demande: 05.01.1994
(73) Titulaire: VALEO, F-75848 Paris Cédex 17 (FR)
(72) Inventeur: Michel, Robert, F-95540 Mery/Oise (FR)
(74) Mandataire: Gamonal, Didier

(56) Documents cités:
- EP-A- 0 493 992
- GB-A- 1 097 869
- US-A- 4 513 850
- US-A- 4 836 057
- US-A- 5 035 312

## Description

La présente invention concerne un actuateur électro-hydraulique, notamment pour la commande d'un embrayage à friction de véhicule automobile.

Un tel actuateur est décrit dans le documents EP-A-0 493 992. Dans ce document, la commande d'un embrayage à friction pour véhicule automobile comporte un circuit hydraulique, une source de pression, un module de commande à fluide ou actionneur à fluide, une timonerie propre à agir sur le dispositif débrayeur de l'embrayage en l'occurrence un diaphragme.

Le module de commande à fluide comporte un actionneur électro-hydraulique pour la manoeuvre automatique de l'embrayage. Cet actionneur électro-hydraulique comporte une électrovalve reliée à une unité de traitement des informations et de commande.

Cette unité, usuellement sous forme d'un calculateur électronique, reçoit des informations provenant de capteurs par exemple des capteurs de vitesse de rotation de l'arbre mené et de l'arbre menant, un capteur de position de la pédale d'accélérateur, ou un capteur de position du papillon du carburateur, un capteur du rapport engagé de la boîte de vitesses et un capteur associé au levier de changement de vitesses.

A partir des informations qu'il reçoit des susmentionnés capteurs, ledit calculateur, programmé en conséquence, envoie une information de commande à l'électrovalve, du type proportionnel, pour faire varier la pression dans la chambre de commande (pression d'utilisation), que comporte ledit module de commande à fluide.

Ainsi le module de commande actionne automatiquement, grâce au calculateur, la timonerie pour modifier l'état de l'embrayage entre sa position embrayage engagé et sa position embrayage désengagé et vice versa.

Dans ce document l'électrovalve est à trois voies et comporte un tiroir de découpage ou soupape mobile sous l'action du champ magnétique créé par une bobine pour obturer un siège et fermer un canal de transfert. Un ressort est associé à ladite soupape pour solliciter constamment celle-ci en direction de son siège.

Cette électrovalve est du type à battement et utilise un solénoïde de commande alimenté par le calculateur selon un rapport cyclique, qui commute le tiroir de découpage d'une position ouverte à une position fermée suivant le rapport cyclique.

L'actionneur électro-hydraulique comporte en outre un tiroir principal ou tiroir de régulation de pression piloté par la soupape de découpage et propre à recouvrir et à découvrir des gorges.

Une des gorges est reliée à une arrivée de pression d'alimentation, l'autre au conduit de retour et à la bâche du réservoir à la faveur d'une gorge délimitée par le siège, et la troisième à la canalisation d'utilisation.

L'extrémité avant du tiroir est propre à obturer plus ou moins un canal de transfert en communication avec la canalisation de retour au réservoir via le siège.

Cet actionneur électro-hydraulique permet de s'affranchir d'un montage avec des pistons agencés en tandem et donc permet de réduire la taille transversale de l'actionneur.

Le corps d'alimentation, que comporte le module de commande à fluide, est conformé pour former un réceptacle cylindrique pour un cylindre principal et également pour former un réceptacle cylindrique pour l'actionneur électro-hydraulique.

Bien que donnant satisfaction, cette disposition présente des inconvénients. En effet, le tiroir principal est soumis à l'action du ressort dont le tarage est fonction de la pression délivrée par ce même tiroir.

La pression de pilotage du tiroir principal est prélevée sur la pression d'utilisation. Elle est une fonction décroissante de celle-ci ce qui limite les performances aux hautes pressions d'utilisation à cause des frottements perturbant la pression de pilotage.

Ce tiroir principal n'a pas une position moyenne stable et la pression délivrée peut subir des variations.

Cette pression n'est pas négligeable, en sorte que le ressort exerce un effort important sur le tiroir de découpage et qu'en conséquence la consommation de courant alimentant la bobine est augmentée.

En outre, le découpage de la pression engendre des vibrations sur la pression utilisée et la pression d'alimentation. En position fermée des fuites peuvent apparaître du fait des faibles recouvrements necessités par la dynamique de découpage.

De plus, le tiroir de régulation s'étend perpendiculairement par rapport au tiroir de découpage. Lors du montage dans son réceptacle, ce tiroir de régulation peut être déformé, et de toute manière, il faut prendre des précautions.

La présente invention a pour objet de pallier, de manière simple et économique, ces inconvénients.

Suivant l'invention un actionneur électro-hydraulique du type sus-indiqué, du genre comportant un corps avec une entrée ou arrivée d'alimentation et une sortie d'utilisation, est caractérisé en ce qu'il comporte un tiroir réducteur de pression qui est, d'une part, en communication avec l'arrivée d'alimentation et donc la source de pression et, d'autre part, avec le tiroir de découpage, en ce que le tiroir de découpage est en communication avec une chambre de pilotage délimitée par le tiroir de régulation de pression et en ce que le tiroir de régulation de pression s'étend parallèlement au tiroir de découpage.

Grâce à l'invention, le ressort, associé au tiroir de découpage, a un tarage nettement réduit du fait que le tiroir de découpage est soumis à une pression qui dépend du tiroir réducteur de pression. La consommation électrique est donc réduite. La pression de pilotage est indépendante de la pression délivrée et de la pression d'alimentation. La pression délivrée agit à l'intérieur du tiroir principal.

En outre du fait de l'agencement du tiroir régulateur de pression, aucune déformation de celui-ci n'est à craindre lors du montage aisé par enfilage axial dans son réceptacle prévu dans le corps du module hydraulique de commande.

La description qui va suivre illustre l'invention en regard des dessins annexés dans lesquels :
- la figure 1 est une vue schématique en coupe du module de commande à fluide comportant l'actionneur électro-hydraulique selon l'invention ;
- la figure 2 est une vue en coupe axiale de l'actionneur électro-hydraulique selon l'invention ;
- la figure 3 est une vue selon la flèche 3 de la figure 2,
- la figure 4 est une vue partielle montrant la fixation du corps principal sur le corps d'interface de l'actionneur.

L'actionneur électro-hydraulique selon l'invention se monte à l'intérieur d'un corps d'alimentation 241 pour la commande d'un embrayage, tel que décrit dans le susmentionné document EP-A-0 493 992 dont le contenu est considéré comme annexé à la présente invention. Par simplification les mêmes références seront reprises pour les éléments communs à la présente invention et à ceux du susmentionné document.

Ainsi le corps 241 constitue un réceptacle 245 pour la réception du cylindre principal 135 à l'intérieur duquel coulisse le piston principal 136 portant la pièce de transfert 234. Ce corps constitue également un réceptacle cylindrique en-dessous du cylindre principal pour montage étanche de l'actionneur électro-hydraulique 352 selon l'invention ici par vissage.

Cet actionneur électro-hydraulique 352 comporte en succession axiale un corps principal 100, un corps d'interface 110 et un électro-aimant 120.

Cette disposition facilite la fabrication de l'actionneur et permet d'orienter les tiroirs 1,2,3, décrits ci-après, dans le sens longitudinal.

A l'intérieur du corps principal sont montés longitudinalement un tiroir de régulation de pression 1 ou tiroir principal, et selon l'invention un tiroir réducteur de pression 2 ou tiroir secondaire. Les tiroirs 1 et 2 sont donc montés parallèlement l'un par rapport à l'autre et ici de part et d'autre de l'axe de symétrie longitudinal 50 de l'actionneur 352.

L'électro-aimant comporte, de manière connue en soi, une bobine 4 avec son support montée dans un corps en matériau ferromagnétique 41,43, tel que du fer doux, et un tiroir de découpage 3, centralement creux et monté centralement dans le corps 41,43 plus particulièrement dans un trou borgne 30 de celui-ci débouchant au niveau du corps 110. Le corps 41,43 est en deux parties, à savoir un noyau 41 dorsal et une carcasse 43 avant pour emprisonner axialement la bobine 4 et son support. Un joint d'étanchéité 44 est interposé entre la face dorsale de la carcasse 42 et la face avant du noyau 41. Le joint 44 est entouré par le support de la bobine 4.

Le tiroir de découpage 3 est également en matériau ferromagnétique, ici du fer doux, et est soumis à l'action d'un ressort 31 prenant appui contre le fond du trou borgne 30 (la face avant du noyau 41) et contre un anneau de butée 32, tel qu'un circlips, monté à l'intérieur de l'alésage interne du tiroir 3. Le tiroir 3 est également soumis à l'action du champ magnétique crée par la bobine 4, l'action du champ magnétique étant antagoniste par rapport à celle du ressort 31.

Le tiroir 3 est ainsi destiné à obturer un siège 37 ou à ouvrir celui-ci, ledit siège 37 étant formé à la faveur de la face dorsale du corps d'interface 110.

Ainsi il est créé une électrovalve du type à battement, la bobine recevant, comme dans le susmentionné document EP-A-0 493 992, des informations du calculateur. Cette bobine 4 commute le tiroir de découpage 3 d'une position ouverte à une position fermée suivant le rapport cyclique.

L'extrémité avant du tiroir 3 présente une gorge 33, tandis que son extrémité arrière porte un joint d'étanchéité 46 propre à coopérer avec la face avant du noyau 41.

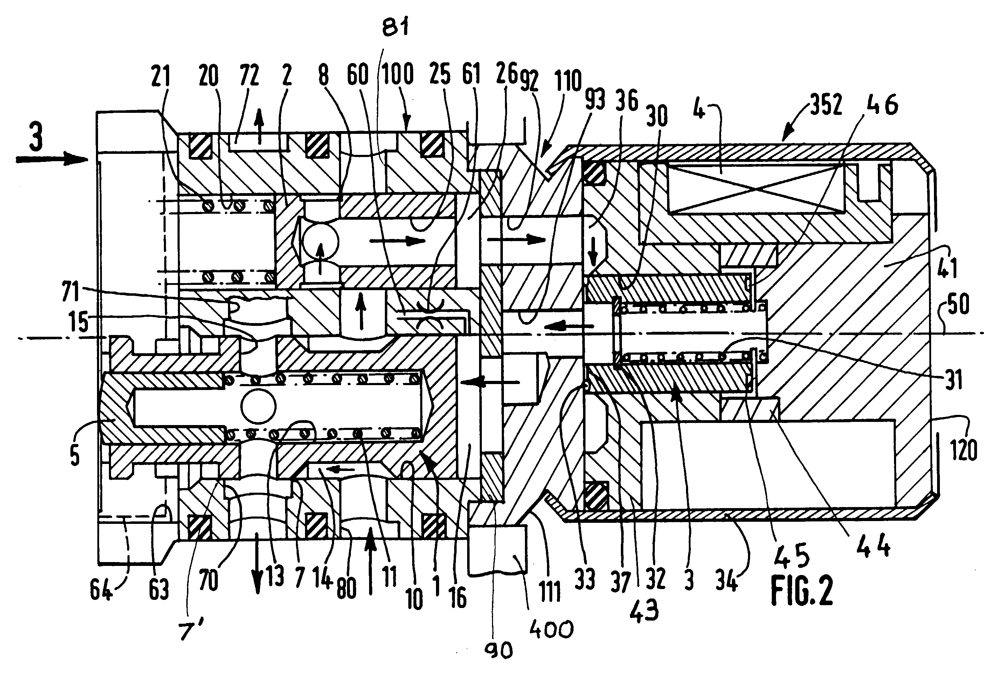

L'électro-aimant 120 est entouré par une bague 34 dont les extrémités sont rabattues au contact avec la face dorsale du noyau 41 et avec le corps d'interface 110, doté à sa périphérie externe d'une gorge 111 à section en forme de V à cet effet. Ainsi l'électro-aimant 12 est rapporté par sertissage sur le corps d'interface 110. Ce corps d'interface 110 est fixé par vissage sur le corps principal 100. Comme visible à la figure 2, le noyau 41 et la carcasse 43 sont creusés pour délimiter avec la bague 34 une cavité annulaire de logement de la bobine 4 avec son support.

Le corps principal 100 est doté de deux perçages traversants longitudinaux 10,20 pour respectivement montage du tiroir principal 1 et du tiroir 2, qui ainsi, suivant une caractéristique de l'invention, sont montés dans le sens longitudinal parallèlement par rapport au tiroir de découpage 3. Les perçages 10 et 20 s'étendent globalement symétriquement par rapport à l'axe 50, de part et d'autre de celui-ci.

Le tiroir de régulation de pression 1 est doté centralement d'un trou borgne 13 pour logement d'un ressort hélicoïdal 11 à l'intérieur dudit trou 13. Ce ressort prend appui sur le fond du trou borgne 13 et sur un piston obturateur 5, formant capuchon, monté également dans le perçage 10. Le piston 5 est dirigé vers la face avant du corps principal 100. Le tiroir 1 permet donc de réguler la pression d'utilisation.

Le tiroir réducteur de pression 2 est soumis à l'action d'un ressort 21 prenant appui sur la face avant du tiroir 2 en étant monté dans le perçage 20. Ainsi les ressorts 11 et 21 sollicitent les tiroirs 1,2 en direction du corps d'interface 110 et donc de la face dorsale du corps 100.

La périphérie externe du tiroir 1 présente une gorge 14 propre à venir découvrir ou refermer une gorge 70 en communication, de manière décrite ci-après, par un canal transversal 71 débouchant dans une gorge périphérique 72 du corps 100, avec l'utilisation (ici avec la canalisation 204) c'est-à-dire avec la chambre de commande 173 délimitée par le cylindre principal 135. La gorge 70 est formée à la faveur du perçage 10.

On voit en 80 une gorge d'arrivée de pression en communication avec la gorge périphérique 14 du tiroir 1. Cette gorge 80, reliée à la source de pression de manière décrite ci-après, telle celle destinée à la direction assistée ou en variante une centrale spécifique, est en communication avec le tiroir 2, le corps 100 étant percé transversalement de part en part à cet effet pour formation d'un canal 81.

Plus précisément, le canal 71 est en communication avec un perçage longitudinal 95 débouchant au niveau de la face avant du corps principal 100.

De même, le canal 81 est en communication avec un perçage longitudinal 94 débouchant au niveau de la face avant du corps principal 100.

Les perçages 94,95 sont disposés symétriquement de part et d'autre de l'axe de symétrie passant par le centre des perçages 10,20 (figure 3).

Le perçage 95 est en communication avec la canalisation 204 d'alimentation de la chambre de commande 173, tandis que le perçage 94 est en communication avec la canalisation d'arrivée 202 du corps 241.

Les canaux 71,81 et les gorges 72,80 sont décalées axialement et trois joints d'étanchéité sont prévus (figure 2) pour étancher les gorges 72,80.

Les canaux 71,81 débouchent à chacune de leurs extrémités respectivement dans les gorges 72,80.

Le canal 71 intercepte les perçages 10,95, tandis que le canal 81 intercepte les perçages 10,94.

Ainsi qu'on l'aura compris, on peut alimenter l'utilisation à partir des gorges 72,80 ou des perçages 94,95, et c'est la raison pour laquelle à la figure 2 les flèches ont été associées aux gorges 72,80.

Ainsi l'actionneur électro-hydraulique présente un corps 100,110,120 avec une entrée ou arrivée d'alimentation 81,80-94 et une sortie d'utilisation 71,72-95. Ici on utilise les perçages 94,95, le corps 100 cooperant à étanchéité avec l'alésage interne 244 du réceptacle 244 de la valve 352. Ainsi, grâce aux joints de la figure 2 et au réceptacle 244 les gorges 71,80 sont fermés.

De manière connue en soi, le tiroir 2 est doté intérieurement d'un alésage 25 en forme de T. L'alésage 25 du tiroir 2 est en communication axialement avec le corps d'interface 110 et transversalement avec le canal 81 qu'il recouvre plus ou moins avec formation d'une restriction portant la référence 8 à la figure 2.

Plus précisément, le tiroir 2 est propre à venir en butée contre un joint 90 interposé axialement entre la face dorsale du corps 100 et la face avant du corps d'interface 110.

Ce joint 90 est percé pour permettre la circulation du fluide de manière décrite ci-après.

De même le tiroir 1 présente intérieurement un alésage, globalement en forme de T, formé par le trou borgne 13 d'orientation longitudinale et par un canal perpendiculaire portant la référence 15. L'alésage en forme de T est fermé par le piston 5.

Le canal 15 communique avec la gorge 70 et le canal 71.

Le tiroir 1 recouvre également plus ou moins la gorge 70 avec formation de restrictions portant les références 7,7' à la figure 2. La restriction 7 intervient au niveau des gorges 14,70, tandis que la restriction 7' intervient entre la gorge 70 et une rainure 63 décrite ci-après. Cette rainure 63 permet un retour au réservoir et est en communication avec la canalisation de retour au reservoir 212 grâce à la gorge 184 formée à l'arrière du réceptacle 244.

On notera que la gorge 14 cylindrique a en section un fond plat et des flancs inclinés pour une bonne progressivité lors du recouvrement et du découvrement de la gorge 70 par le tiroir.

Ainsi le tiroir 1, soumis intérieurement à la pression de l'utilisation, permet de réguler la pression dans le canal d'utilisation 204 et donc de réguler la pression d'utilisation grâce aux restrictions 7,7'.

Une chambre de pilotage 16 est formée entre le tiroir 1 et le corps d'interface 110. De même une chambre de réduction 26 est formée entre le tiroir 2 et le corps d'interface 110. Ces chambres sont délimitées par le joint 90.

Ainsi qu'on l'aura compris, de manière connue en soi, le mouvement des tiroirs 1 et 2 est déterminé par la pression régnant respectivement dans les chambres 16 et 26, ainsi que par l'action antagoniste des ressorts, ici du type à boudin, respectivement 11,21 et que par la pression d'utilisation agissant sur le piston antagoniste 5.

On notera que la pression d'utilisation agit sur une surface moindre que la face d'extrémité du tiroir 1 délimitant la chambre 16. Ainsi la pression dans la chambre 16 peut être réduite par rapport à la pression d'utilisation régnant dans le trou 13.

Un canal tortueux 93 est percé dans le corps d'interface 110 et le joint 90 pour relier la chambre 16 à une gorge ou chambre de découpage 36 formée dans le corps 41,43 (la face avant de la carcasse 43) via le tiroir 3. La gorge 36 cylindrique a en section un fond plat et des flancs inclinés. L'un des flancs inclinés permet une communication de la chambre 36 avec le tiroir 3. Cette chambre 36 est recouverte par le corps 110.

On notera la présence d'un joint d'étanchéité torique (figure) entre le corps 110, la carcasse 43 et la bague 34 pour éviter toute fuite. Le tiroir 3 est ainsi apte à obturer ou à ouvrir la chambre 36. De même, un perçage longitudinal 92 est formé dans le corps 110 et le joint 90 et permet une communication entre le tiroir de découpage 3 et la chambre de réduction 26 via la chambre 36.

Cette chambre 36 entoure extérieurement le tiroir 3, dont l'alésage interne forme une chambre de réserve.

Le dispositif fonctionne de la manière suivante : la pression d'alimentation arrive dans la gorge 80 par le perçage 94 et le canal 81, puis pénètre dans la gorge périphérique 14 du tiroir 1, qui est ainsi admis à se déplacer dans un sens ou dans l'autre à l'encontre de la force exercée par le ressort 11 et par le piston antagoniste 5. Ce tiroir découvre ainsi plus ou moins la gorge 70, ce qui permet de moduler la pression d'alimentation de l'utilisation (pression dans la chambre 173), grâce aux restrictions 7,7'.

Corollairement le fluide, par le canal 81 et la restriction 8, entre en communication avec le perçage en T 25 du tiroir 2, qui est admis ainsi à se déplacer dans un sens ou dans l'autre, à l'encontre de l'action exercée par le ressort 21, puis le fluide transite du canal 25 à la chambre 26, puis à travers le perçage 92, formant canal, et parvient dans la gorge 36.

Le tiroir 3, qui présente à ses extrémités avant et arrière respectivement une gorge 33 et une gorge 46, est apte à obturer ou découvrir plus ou moins le siège 37 formé en regard dans le corps 110, et à interrompre ainsi une communication entre la chambre 36 et la chambre 16 via le canal 93, qui débouche dans l'alésage central du tiroir 3. Grâce aux gorges 33 et 46 du tiroir 3, il est formé des chambres d'équilibrage évitant tout contact brutal de fin de course du tiroir 3 sur le corps 110 et la carcasse 43. La communication, entre la gorge 36 et le canal 93, est ainsi plus ou moins interrompue, en sorte que la pression dans la chambre de pilotage 16 est variable en étant plus ou moins haute.

Ainsi qu'on l'aura compris, le tiroir réducteur de pression 2 permet d'abaisser la pression d'alimentation qui parvient dans la chambre 36. Par exemple si la pression d'alimentation variable est de l'ordre de 20 à 40 bars, la pression dans la chambre 26 sera de l'ordre de 5 bars, la pression dans la chambre de pilotage 16 variant ainsi de 0 à 5 bars.

Grâce aux restrictions 7,7' le déplacement du tiroir 1 permet de réduire la pression d'utilisation en pratique de 0 à 20 bars.

Ainsi la pression dans la chambre de pilotage 16 dépend du mouvement du tiroir de découpage 3 et donc des signaux envoyés par le calculateur à la bobine 4.

Le tiroir 3 de l'électro-aimant 120 pilote donc le tiroir de régulation 1 ou tiroir principal.

Bien entendu, il est prévu dans le corps 100 un canal 60 de retour à la bâche ou réservoir (canalisation 212) avec un gicleur 61 pour communication de la chambre 16 avec la bâche. Le canal 60 débouche dans la rainure 63 en communication avec la gorge 184.

Ainsi la pression dans la chambre 16 dépend du gicleur 61 et lorsque le tiroir 3 est en contact avec son siège 37, la pression dans la chambre 16 chute progressivement à cause du gicleur 61.

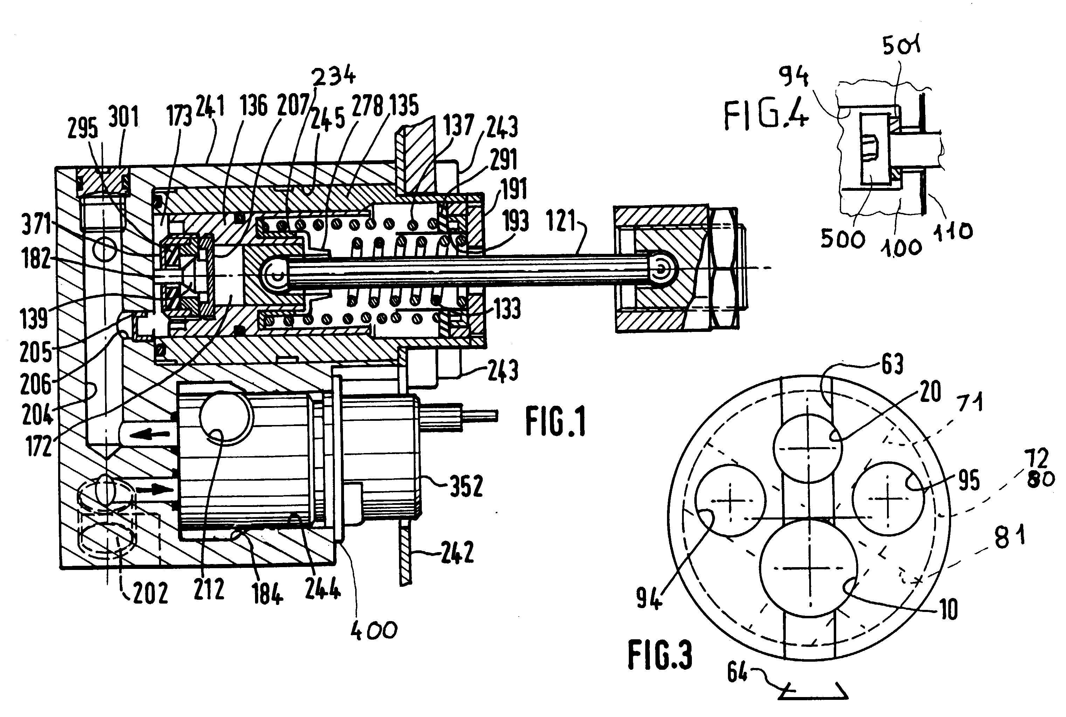

Suivant une autre caractéristique, la face avant du corps 100 est dotée d'une rainure transversale 63 en forme de queue d'aronde. Cette rainure (figure 3) permet une communication avec la canalisation 212 de manière précitée et également le montage d'un cavalier 64, de forme complémentaire, servant d'appui au piston 5 et au ressort 21. Ainsi les tiroirs 1 et 2 ne peuvent s'échapper et ne risquent pas d'être déformés lors du montage de l'électrovalve 352 dans son réceptacle (figure 1).

Bien entendu, la présente invention n'est pas limitée à l'exemple de réalisation décrit. En particulier l'arrivée d'alimentation et la sortie d'utilisation peuvent être réalisées à la faveur des gorges 70,80.

On notera que la fixation du corps principal 100 avec le corps d'interface 110 est réalisée à l'aide de vis 500 montées dans les perçages 94,95 d'intervention de joints d'étanchéité 501 comme visible à la figure 4.

On appréciera d'une manière générale que l'électrovalve a des bons temps de réponse, que les frottements sont réduits ainsi que la consommation de courant, le tiroir 3 étant aisément déplaçable du fait qu'il est chargé faiblement par le ressort 31 et du fait du tiroir de réduction de pression 2 caractéristique de l'invention avec la chambre de pilotage 16.

L'électrovalve est également très compacte radialement et son montage se fait aisément par enfilage, tous les tiroirs 1 à 3, de forme cylindrique, s'étendant longitudinalement.

Bien entendu l'actionneur peut commander non pas un embrayage comme dans la figure 1, mais la manoeuvre d'une boîte de vitesses ou autres.

Ainsi qu'il ressort à l'évidence de la déscription et des dessins le joints d'étanchéité 44 assure à la fois une rupture du chemin magnétique (le champs magnétique passant par la bague 34 avantageusement en matériau ferromagnétique), et une étanchéité du fluide vers les parties séches de la bobine 4.

Ce joint 44 permet également un contrôle aisé du jeu de battement du tiroir 3.

En effet, lors de la fixation des corps 41,43 et 110 par sertissage à l'aide de la bague 34, il suffit d'introduire une butée épaulée dans le canal 93, qui, après traversée du ressorts 31 est propre à servir de butée au noyau 41.

Une côte précise est ainsi définie entre la tête de la butée, propre à venir en contact avec la face avant du corps 110, et le pied de la butée, propre à venir en contact avec la face avant du noyau 41.

On notera qu'ainsi un entrefer 46 déterminé existe entre l'extrémité arrière du tiroir 3 et la face avant du noyau 41.

Le champs magnétique est déterminé par cet entrefer, et se referme à travers les pièces 41,3,42.

On notera que le joint 90 d'étanchéité fait également office de butée par les tiroirs 1,2 en sorte que les bruits sont réduits. Ce joint obture également la partie horizontale du passage 93 coaxiale au tiroir 3. Ce joint est percé pour communication du passage 93 avec la chambre 16.

Le tiroir 3 contrôle par son battement (déplacement axial) la pression venant de la chambre 36 vers la gorge antichoc 33, puis vers la chambre 16, ce qui permet d'augmenter les débits contrôlés pour une même force magnétique.

Le tiroir 3 est équilibré vis-à-vis des pressions hydrauliques et est donc soumis à l'action du champs magnétique se refermant par l'entrefer 46 et également le ressorts antagoniste 31.

Le tiroir 1 est en équilibre sous l'effet de la pression de pilotage régnant dans la chambre 16, le ressorts antagoniste de fermeture 11 la pression antagoniste régnant dans la chambre 13. Les sections internes (trou 13) et externe du piston sont donc fonction des applications.

On appréciéra que le guidage du tiroir 1 est augmenté par l'intermédiare du perçage au alésage 10 se prolongeant dans la rainure 62.

On notera également que l'usinage du corps principal est aisé grâce aux perçages 94,95, aux canaux 71,72, aux gorges 70,72,80 et à la rainure 63. Ce corps 100 est d'un emploi universel, l'entrée et la sortie du fluide pouvant se faire de deux manières différentes, et c'est la raison pour laquelle on a prévu des joints (figure 1) pour rendre étanche l'entrée des perçages 94 et 95 au niveau du fond du réceptacle 244 et de l'entrée des conduites menant respectivement à l'entrée 202 et à la chambre 204.

On notera qu'une plaque de fixation 400 fixée par vissage dans le corps 241 (figure 1) permet de plaquer le corps principal 100 contre le fond de l'alésage 244 et de comprimer les joints précités associés aux percages au conduites 94,95. La coopération de la plaque 400 avec le corps 100 permet de réduire la chaîne des côtés.

Cette plaque 400 centre le corps 110 et présente un alésage centrale conformé pour créer un détrompeur en coopération avec la surface externe du corps 110, afin de monter la valve 352 dans la bonne position.

Bien entendu on peut fixer autrement entre eux les corps 100 et 110, par exemple par vissage en dehors des perçages 94,95 alors de forme borgne. On peut faire appel à des tirants pour fixer le corps 110 aux corps 44,43.

## Revendications

1. Actionneur électro-hydraulique, notamment pour la commande d'un embrayage à friction de véhicule automobile, comportant un corps (100,110,120) avec une arrivée d'alimentation (80,81-94) et une sortie d'utilisation (71,72-95), et montés dans ledit corps un tiroir de découpage (3) appartenant à un électro-aimant (120), un tiroir de régulation de pression (1) associé audit tiroir de découpage (3) pour réguler la pression d'utilisation, caractérisé en ce qu'il comporte un tiroir réducteur de pression (2) qui est, d'une part, en communication avec l'arrivée d'alimentation (80,81-94) et, d'autre part, avec le tiroir de découpage (3), en ce que le tiroir de découpage (3) est en communication avec une chambre de pilotage (16) délimitée par le tiroir de régulation de pression (1) et en ce que le tiroir de régulation de pression (1) s'étend parallèlement au tiroir de découpage (3).

2. Actionneur selon la revendication 1, caractérisé en ce que les tiroirs de régulation de pression (1) et de réduction de pression (2) sont montés parallèlement l'un par rapport à l'autre.

3. Actionneur selon la revendication 1 ou 2, caractérisé en ce que le tiroir de réduction de pression (2) est en communication avec une chambre de réduction (26) laquelle communique avec une chambre de découpage (36) en communication avec le tiroir de découpage (3).

4. Actionneur selon la revendication 3, caractérisé en ce que la chambre de découpage (36) entoure le tiroir de découpage (3), qui présente une extrémité avant dotée d'une gorge (33) antichoc.

5. Actionneur selon la revendication 4, caractérisé en ce que le tiroir de découpage (3) est en communication avec la chambre de pilotage (16) par l'intermédiaire d'un canal tortueux (93) ménagé dans un corps d'interface (110), ledit tiroir de régulation de pression (1) étant monté dans un corps principal (100) solidaire du corps d'interface (110).

6. Actionneur selon la revendication 5, caractérisé en ce que la chambre de pilotage (16) est en communication avec un canal de retour à la bâche (60) avec intervention d'un gicleur (61).

7. Actionneur selon la revendication 5 ou 6, caractérisé en ce que le tiroir de régulation de pression (1) et le tiroir de réduction de pression (2) sont montés dans un corps principal dont la face avant est dotée d'une rainure transversale (63) en forme de queue d'aronde, ladite rainure permettant le montage d'un cavalier (63) évitant aux tiroirs (1,2) de s'échapper dans ledit corps principal (100).

8. Actionneur selon l'une quelconque des revendication 1 à 7, caractérisé en ce que l'actionneur électromagnétique comporte en succession axiale un corps principale (100), dans lequel sont montés le tiroir de régulation de pression (1) et le tiroir réducteur de pression (2), un corps d'interface (110) et un électroaimant (120) contenant le tiroir de découpage (3) monté dans un trou borgne (30) délimité par une carcasse (43) et un noyau (41) séparés l'un de l'autre par un joint d'étanchéité et un ce que la face avant du noyau (41) forme le fond du trou borgne et délimité avec le tiroir de découpage un entrefer (46).

9. Actionneur selon l'une quelconque des revendications 5 à 8, caractérisé en ce que le corps principal (100) est doté de perçages longitudinaux (94,95), reliés chacun à un canal transversal (81,71) communiquant chacun avec une gorge, lesdits perçages longitudinaux interceptant le perçage (10) dans lequel est monté le tireur de régulation de pression (1).

10. Actionneur selon la revendication 9, caractérisé en ce que le tiroir de régulation de pression (1) presente intérieurement un trou borgne (13) en communication avec le canal transversal (71) concerné.

## Patentansprüche

1. Elektrohydraulische Betätigungsvorrichtung, insbesondere für die Steuerung einer Reibungskupplung für Kraftfahrzeuge, bestehend aus einem Körper (100, 110, 120) mit einem Zuleitungseinlaß (80, 81-94) und einem Betriebsauslaß (71, 72-95) sowie, in dem besagten Körper eingebaut, einem Trennschieber (3), der zu einem Elektromagneten (120) gehört, und einem Druckregelschieber (1), der mit dem besagten Trennschieber (3) verbunden ist, um den Betriebsdruck zu regeln, **dadurch gekennzeichnet**, daß sie einen Druckminderungsschieber (2) umfaßt, der einerseits mit dem Zuleitungseinlaß (80, 81-94) und andererseits mit dem Trennschieber (3) in Verbindung steht, daß der Trennschieber (3) mit einer Vorsteuerkammer (16) in Verbindung steht, die durch den Druckregelschieber (1) begrenzt wird, und daß sich der Druckregelschieber (1) parallel zum Trennschieber (3) erstreckt.

2. Betätigungsvorrichtung nach Anspruch 1, **dadurch gekennzeichnet**, daß der Druckregelschieber (1) und der Druckminderungsschieber (2) parallel zueinander eingebaut sind.

3. Betätigungsvorrichtung nach Anspruch 1 oder 2, **dadurch gekennzeichnet**, daß der Druckminderungsschieber (2) mit einer Druckminderungskammer (26) in Verbindung steht, welche mit einer Trennkammer (36) verbunden ist, die mit dem Trennschieber (3) in Verbindung steht.

4. Betätigungsvorrichtung nach Anspruch 3, **dadurch gekennzeichnet**, daß die Trennkammer (36) den Trennschieber (3) umgibt, der ein vorderes Ende mit einer Stoßsicherungsrille (33) aufweist.

5. Betätigungsvorrichtung nach Anspruch 4, **dadurch gekennzeichnet**, daß der Trennschieber (3) mit der Vorsteuerkammer (16) über einen gewundenen Kanal (93) in Verbindung steht, der in einem Anschlußkörper (110) vorgesehen ist, wobei der besagte Druckregelschieber (1) in einem fest mit dem Anschlußkörper (110) verbundenen Hauptkörper (100) eingebaut ist.

6. Betätigungsvorrichtung nach Anspruch 5, **dadurch gekennzeichnet**, daß die Vorsteuerkammer (16) mit einem Rücklaufkanal zum Sammelbehälter (60) unter Einschaltung einer Düse (61) in Verbindung steht.

7. Betätigungsvorrichtung nach Anspruch 5 oder 6, **dadurch gekennzeichnet**, daß der Druckregelschieber (1) und der Druckminderungsschieber (2) in einem Hauptkörper eingebaut sind, dessen Vorderseite mit einer schwalbenschwanzförmigen Quernut (63) versehen ist, wobei diese Nut den Einbau eines Anschlags (63) ermöglicht, der verhindert, daß die Schieber (1, 2) in den Hauptkörper (100) entweichen können.

8. Betätigungsvorrichtung nach einem der Ansprüche 1 bis 7, **dadurch gekennzeichnet**, daß die elektromagnetische Betätigungsvorrichtung in axialer Abfolge einen Hauptkörper (100), in dem der Druckregelschieber (1) und der Druckminderungsschieber (2) eingebaut sind, einen Anschlußkörper (110) und einen Elektromagneten (120) umfaßt, welcher den Trennschieber (3) enthält, der in einem Blindloch (30) eingebaut ist, das durch ein Gehäuse (43) und einen Kern (41) begrenzt wird, die durch eine Dichtung voneinander getrennt sind, und daß die Vorderseite des Kerns (41) den Boden des Blindlochs bildet und mit dem Trennschieber einen Luftspalt (46) begrenzt.

9. Betätigungsvorrichtung nach einem der Ansprüche 5 bis 8, **dadurch gekennzeichnet**, daß der Hauptkörper (100) mit Längsbohrungen (94, 95) versehen ist, die jeweils mit einem Querkanal (81, 71) verbunden sind, der jeweils mit einer Rille in Verbindung steht, wobei die besagten Längsbohrungen die Bohrung (10) abtrennen, in welcher der Druckregelschieber (1) eingebaut ist.

10. Betätigungsvorrichtung nach Anspruch 9, **dadurch gekennzeichnet**, daß der Druckregelschieber (1) innen ein Blindloch (13) aufweist, das mit dem betroffenen Querkanal (71) in Verbindung steht.

## Claims

1. An electrohydraulic actuator, especially for the control of a motor vehicle friction clutch, comprising a body (100, 110, 120) with fluid input means (80, 81 - 94) and a working outlet means (71, 72 - 95), and, mounted in the said body, a delivery piston (3) which is part of an electromagnet (120), and a pressure regulating piston (1) associated with the said delivery piston (3) for regulating the working pressure, characterised in that it includes a pressure reduction piston (2) which is in communication, firstly, with the fluid inlet means (80, 81 -94), and secondly with the delivery piston (3), in that the delivery piston (3) is in communication with a control chamber (16) delimited by the pressure regulating piston (1), and in that the pressure regulating piston (1) lies parallel to the delivery piston (3).

2. An actuator according to Claim 1, characterised in that the pressure regulating piston (1) and the pressure reduction piston (2) are mounted parallel to each other.

3. An actuator according to Claim 1 or Claim 2, characterised in that the pressure reduction piston (2) is in communication with a reduction chamber (26) which communicates with a delivery chamber (36) which is in communication with the delivery piston (3).

4. An actuator according to Claim 3, characterised in that the delivery chamber (36) surrounds the delivery piston (3), which has a leading end formed with a shock-absorbing groove (33).

5. An actuator according to Claim 4, characterised in that the delivery piston (3) is in communication with the control chamber (16) via a winding duct (93) formed in an interface body (110), the said pressure regulating piston (1) being mounted in a main body (100) which is fixed to the interface body (110).

6. An actuator according to Claim 5, characterised in that the control chamber (16) is in communication with a drain duct (60) for return to the fluid reservoir, with a flow restrictor (61) being interposed.

7. An actuator according to Claim 5 or Claim 6, characterised in that the pressure regulating piston (1) and the pressure reduction piston (2) are mounted in a main body, the leading face of which has a transverse groove (63) of dovetail form, with the said groove enabling an insert member (63) to be fitted for preventing escape of the pistons (1; 2) into the said main body (100).

8. An actuator according to any one of Claims 1 to 7, characterised in that the electromagnetic actuator comprises, in axial succession, a main body (100) in which the pressure regulating piston (1) and pressure reduction piston (2) are mounted, an interface body (110), and an electromagnet (120) containing the delivery piston (3), which is mounted in a blind hole (30) delimited by a carcass member (43) and a core member (41) which are separated from each other by a sealing ring, and in that the leading face of the core member (41) defines the base of the blind hole and delimits, with the delivery piston, an air gap (46).

9. An actuator according to any one of Claims 5 to 8, characterised in that the main body (100) is formed with longitudinal through holes (94, 95), each of which is connected to a transverse duct (81, 71), each of which communicates with a groove, with the said longitudinal through holes intercepting the bore (10) in which the pressure regulating piston (1) is mounted.

10. An actuator according to Claim 9, characterised in that the pressure regulating piston (1) has an internal blind hole (13) which is in communication with the appropriate transverse duct (71).
